# EUROPÄISCHE PATENTSCHRIFT

(11) **EP 3 343 188 B1**
(45) Veröffentlichungstag und Bekanntmachung des Hinweises auf die Patenterteilung: **18.08.2021**
(21) Anmeldenummer: 17199157.3
(22) Anmeldetag: 30.10.2017
(51) Int. Cl.: G01G 11/00, B65G 15/62

(54) **FÖRDERBANDWAAGE MIT FÖRDERBAND SOWIE FÖRDERBAND**
CONVEYOR BELT AND BELT WEIGHER WITH CONVEYOR BELT
DISPOSITIF DE PESAGE POUR TRANSPORTEUR À BANDE POURVU DE TRANSPORTEUR À BANDE AINSI QUE TRANSPORTEUR À BANDE

(30) Priorität: 28.12.2016 DE 102016125774
(43) Veröffentlichungstag der Anmeldung: 04.07.2018
(73) Patentinhaber: Bizerba SE & Co. KG, 72336 Balingen (DE)
(72) Erfinder: WEHRMANN, Johann, 72336 Balingen (DE)
(74) Vertreter: Manitz Finsterwald Patent- und Rechtsanwaltspartnerschaft mbB

(56) Entgegenhaltungen:
- DE-A1-102007 020 311
- DE-C2- 19 618 506

## Beschreibung

Die vorliegende Erfindung betrifft ein Förderband zum Transport von Stückgut, insbesondere Wägegut, insbesondere für eine Förderbandwaage zum Transport und zum Wiegen von Stückgut, insbesondere Wägegut, das einen Bandkörper mit einer Oberseite, einer Unterseite und einer sich in Transportrichtung des Stückguts erstreckenden Länge und ein im Betrieb des Förderbands um den Bandkörper umlaufendes Transportband umfasst.

Bei bloßen Förderzwecken werden in der Regel keine besonderen Anforderungen an die Ebenheit der Oberseite der Bandkörpers gestellt, auf der das Obertrum des Transportbands, das das Stückgut transportiert, aufliegt und die als Gleitfläche für das Obertrum des Transportbands dient. Das Förderband kann jedoch auch Teil einer Förderbandwaage sein, bei der das Förderband auf einer Waageneinheit mit zumindest einer Wägezelle angeordnet ist, um das Gewicht eines jeweiligen Stückguts zu kontrollieren oder zu bestimmen. In diesem Fall kann ein an seiner Oberseite unebener Bandkörper dazu führen, dass im Betrieb des Förderbandwaage, d.h. wenn sich das Obertrum des Transportbands, insbesondere mit darauf befindlichem Wägegut, über die Oberseite des Bandkörpers hinwegbewegt, Schwingungen und damit zusätzliche vertikale Kräfte auf die Waageneinheit wirken, wodurch die Messergebnisse der Wiegungen verfälscht werden.

Um derart verfälschte Messungen zu verhindern, ist es aus dem Dokument DE 196 18 506 C2 bekannt, als Bandkörper eine Auflageplatte zu verwenden. Konkret ist diese Auflageplatte als Verbundplatte ausgebildet, die aus einem Kern aus druckfestem Material wie Hartschaumstoff mit ebener Oberfläche und einer dünnen oberen und unteren Deckschicht besteht, die jeweils unter Verwendung eines Klebers mit dem Kern verklebt sind. In dem Dokument DE 10 2007 020 311 A1 wird die erforderliche Ebenheit durch einen Bandkörper in Form einer Trägerplatte mit umgebogenen Seitenwangen erreicht. Die Herstellung der aus dem Stand der Technik bekannten Bandkörper ist jedoch vergleichsweise aufwändig.

Der Erfindung liegt die Aufgabe zugrunde, ein Förderband der eingangs genannten Art bereitzustellen, welches auf einfache Weise herstellbar ist und bei Verwendung in Verbindung mit einer Förderbandwaage eine Gewichtsermittlung mit hoher Genauigkeit ermöglicht.

Diese Aufgabe wird durch eine Vorrichtung mit den Merkmalen des unabhängigen Anspruchs 1 gelöst, und insbesondere dadurch, dass eine Deckplatte vorgesehen ist, die mittels eines doppelseitigen Klebebands, welches durch und durch aus Klebstoff besteht, auf die Oberseite des Bandkörpers aufgeklebt ist und auf der das Obertrum des Transportbands aufliegt.

Erfindungsgemäß ist also ein doppelseitiges Klebeband, welches durch und durch aus Klebstoff besteht, vorgesehen, das zwischen der Oberseite des Bandkörpers und der Deckplatte angeordnet ist, um die Deckplatte auf die Oberseite des Bandkörpers aufzukleben.

Die Deckplatte, insbesondere Metallplatte, ermöglicht eine ebene Auflage- und Gleitfläche für das Transportband. Die insbesondere ebene Deckplatte mittels eines doppelseitigen Klebebands auf den Bandkörper aufzukleben, ist in der Herstellung deutlich einfacher als eine dünne Deckschicht mittels eines flüssigen Klebers auf einen Kern aus druckfestem Material aufzukleben, insbesondere deshalb, da kein zeitaufwändiger Trocknungsprozess erforderlich ist. Auch auf ein aufwändiges Umbiegen von Seitenwangen an einer Trägerplatte, bei dem sehr achtsam vorgegangen werden muss, um zu verhindern, dass die Ebenheit der Trägerplatte bei dem Umformvorgang leidet, kann verzichtet werden.

Das erfindungsgemäße Förderband ist insbesondere dazu vorgesehen, in einer Förderbandwaage, insbesondere einem Checkweigher oder einem Preisauszeichner, eingesetzt zu werden. Die Förderbandwaage kann ein Zuführband, ein Wägeband und ein Abführband umfassen. Bevorzugt kommt das erfindungsgemäße Förderband dabei zumindest als Wägeband zum Einsatz. Es kann jedoch zusätzlich oder alternativ auch als Zuführband und/oder als Abführband zum Einsatz kommen.

Bevorzugt umfasst das Förderband wenigstens eine Transportrolle, insbesondere zwei Transportrollen, die in Transportrichtung vor und hinter dem Bandkörper angeordnet sind, wobei dann das Transportband im Betrieb des Förderbands um den Bandkörper und die wenigstens eine Transportrolle, insbesondere die zwei Transportrollen, umläuft. Üblicherweise wird die hinter dem Bandkörper angeordnete Transportrolle angetrieben.

Das Klebeband besteht aus einem einheitlichen Material, d.h. das Klebeband besteht durch und durch aus Klebstoff. Ein Schaumstoff-Klebeband hingegen besteht aus einem Schaumträger, auf dem lediglich auf der Oberseite und/oder der Unterseite ein dünner Klebestofffilm vorhanden ist. Wirken auf ein Schaumstoff-Klebeband Scherkräfte, wird oft der Schaumstoffkern in Mitleidenschaft gezogen und reißt gegebenenfalls. Das Klebeband aus einem einheitlichen Material hingegen besteht nur aus Klebematerial, d.h. es besitzt keinen Kern aus Schaumstoff. Die Kraft, die ein derartiges Klebeband aushält, entspricht somit der Verbindungskraft des Klebstoffs. Wirken Scherkräfte, wird das Klebeband weniger schnell in Mitleidenschaft gezogen. Beispielsweise kann das insbesondere elastische Klebeband aus einem geschlossenzelligen Acrylatklebstoff bestehen.

Vorzugsweise erstreckt sich die Deckplatte über zumindest im Wesentlichen die gesamte Länge des Bandkörpers, und/oder die Deckplatte kann in Transportrichtung des Förderbands ein- oder beidseitig unter dem Obertrum des Transportbands hervorstehen. Hierdurch kann gewährleistet werden, dass das Obertrum des Transportbands ganzflächig auf einer möglichst ebenen Oberfläche, insbesondere gleitend, aufliegt.

Die Deckplatte ist bevorzugt aus einem Metall, insbesondere einer metallischen Legierung, insbesondere Stahl, gefertigt. Stahl ist besonders stabil. Der Bandkörper ist bevorzugt aus einem Metall, insbesondere Aluminium, gefertigt. Aluminium ist besonders leicht.

Insgesamt kann bei Verwendung einer Deckplatte aus Stahl und eines Bandkörpers aus Aluminium eine hohe Stabilität bei gleichzeitig reduziertem Gewicht erreicht werden. Bei Verwendung des Förderband als Wägeband stellt das Förderband eine Vorlast für die Waageneinheit dar, d.h. die mindestens eine Wägezelle wiegt bei einem Wiegevorgang nicht nur das eigentliche Wägegut, sondern die zumindest eine Wägezelle wiegt zusätzlich auch immer das Förderband mit. Ist das Förderband leichter, ist das zu wiegende Gesamtgewicht aus Förderband und Wägegut geringer. Dies ist von Vorteil, da eine geringere Vorlast die Genauigkeit des Wägeprozesses erhöht. Aus diesem Grund ist es auch vorteilhaft, wenn, alternativ oder zusätzlich, die vorgenannte wenigstens eine Transportrolle, insbesondere die vorgenannten zwei Transportrollen jeweils, aus einem faserverstärktem Kunststoff gefertigt ist bzw. sind.

Bei Verwendung einer Deckplatte aus Stahl und eines Bandkörpers aus Aluminium kann jedoch das Problem entstehen, dass ein Bimetall-Effekt auftritt, da die beiden unterschiedlichen Materialien bei Temperaturschwankungen verschiedenen Längenänderungen unterliegen. Dies betrifft insbesondere auch den Fall, dass sich die Temperatur bei der Herstellung des Bandkörpers von der Temperatur beim Betrieb des Bandkörpers unterscheidet. Hierdurch wird eine starre Verbindung, zum Beispiel durch Schrauben oder Nieten, oder bei Verwendung eines harten Klebers, jedoch belastet. Dies kann zu Verbiegungen des Bandkörpers und Unebenheiten führen. Durch die Verwendung eines Klebebands können derartige Probleme vermieden werden. Grundsätzlich wäre es auch denkbar, einen elastischen 2-Komponenten-Kleber zu verwenden, um die vorstehend erläuterten Probleme zu vermeiden. Ein derartiger Kleber müsste jedoch nass aufgebracht werden, und dann anschließend in einem Trocknungsprozess verfestigt werden. Ferner wären in diesem Fall Abstandshalter in Form von Kugeln, Drähten, Plättchen oder dergleichen erforderlich, um eine ausreichend dicke Klebeschicht gewährleisten zu können.

An der Unterseite des Bandkörpers kann eine weitere Deckplatte oder eine Querstrebe angebracht sein, insbesondere mittels Anschrauben oder Kleben, insbesondere mittels eines doppelseitigen Klebebands, wie es vorstehend im Zusammenhang mit der Deckplatte, die auf die Oberseite des Bandkörpers aufgeklebt ist, erläutert ist. Die weitere Deckplatte bzw. die Querstrebe kann zur Stabilisierung des Rundlaufs des Förderbands beitragen.

Bevorzugt besitzt die Deckplatte, insbesondere Metallplatte, eine Dicke von wenigstens 1 mm und/oder höchstens 3 mm, besonders bevorzugt im Bereich von 1,5 bis 2 mm.

Gemäß einer Ausführungsform der Erfindung umfasst der Bandkörper eine aus mehreren Profilen, insbesondere Strangpressprofilen, insbesondere aus Aluminium, zusammengesetzte Profilanordnung. Bevorzugt ist das Klebeband dann auf den Profilen angebracht, insbesondere aufgeklebt. Insbesondere umfasst die Profilanordnung wenigstens zwei sich in Transportrichtung des Stückguts erstreckende Profile und wenigstens zwei sich quer, insbesondere senkrecht, zur Transportrichtung des Stückguts erstreckende Profile. Durch die Ausbildung des Bandkörpers als Profilanordnung kann das Gewicht des Bandkörpers reduziert werden.

Bevorzugt umfasst das Klebeband mehrere Klebebandstreifen und die Gesamtlänge der Klebebandstreifen zusammen beträgt wenigstens 140% der Länge des Bandkörpers, insbesondere wenigstens 180% der Länge des Bandkörpers, insbesondere wenigstens 200% der Länge des Bandkörpers. Beispielsweise kann das Klebeband wenigstens zwei Klebebandstreifen umfassen, die an den beiden Längsseiten des Bandkörpers angebracht sind und die sich jeweils über wenigstens 70% der Länge des Bandkörpers, insbesondere über zumindest im Wesentlichen die gesamte Länge des Bandkörpers, erstrecken. Bevorzugt ist das Klebeband auf mehreren sich in Transportrichtung des Stückguts erstreckenden Profilen und/oder auf mehreren sich quer zur Transportrichtung des Stückguts erstreckenden Profilen angebracht. Bevorzugt erstreckt sich das Klebeband über eine Länge von wenigstens 40%, insbesondere wenigstens 60%, insbesondere wenigstens 80%, insbesondere zumindest im Wesentlichen 100%, der Gesamtlänge der Profile zusammen. Bevorzugt ist die Deckplatte flächig auf den Bandkörper, insbesondere die vorgenannte Profilanordnung, aufgeklebt.

Die Erfindung betrifft ferner eine Förderbandwaage mit einer Waageneinheit mit mindestens einer Wägezelle und einem auf die Waageneinheit aufgesetzten Förderband gemäß der vorstehenden Beschreibung.

Darüber hinaus betrifft die Erfindung ein Verfahren zur Herstellung eines Förderbands zum Transport von Stückgut nach Anspruch 11, insbesondere für eine Förderbandwaage, das einen Bandkörper mit einer Oberseite, einer Unterseite und einer sich in Transportrichtung des Stückguts erstreckenden Länge und ein im Betrieb des Förderbands um den Bandkörper umlaufendes Transportband umfasst, bei dem mittels eines doppelseitigen Klebebands, welches durch und durch aus Klebstoff besteht, eine Deckplatte, auf der das Obertrum des Transportbands aufliegt, auf die Oberseite des Bandkörpers aufgeklebt wird. Bevorzugt werden anschließend der Bandkörper und die Deckplatte miteinander verpresst. Das Aufkleben der Deckplatte auf die Oberseite des Bandkörpers mittels des doppelseitigen Klebebands, welches durch und durch aus Klebstoff besteht, kann derart erfolgen, dass zuerst das doppelseitige Klebeband auf die Oberseite des Bandkörpers aufgebracht wird und danach die Deckplatte auf das doppelseitige Klebeband, welches durch und durch aus Klebstoff besteht, aufgebracht wird.

Weiterbildungen des erfindungsgemäßen Verfahrens ergeben sich in analoger Weise aus den Weiterbildungen des erfindungsgemäßen Förderbands.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen, jeweils in schematischer Darstellung,
- Fig. 1: ein erfindungsgemäßes Förderband mit einem Bandkörper und einer Deckplatte in einer perspektivischen Ansicht,
- Fig. 2: den Bandkörper aus Fig. 1 in einer vereinfachten Ansicht von oben,
- Fig. 3: einen Ausschnitt des Bandkörpers und der Deckplatte aus Fig. 1 in einer vereinfachten Schnittdarstellung, und

Fig. 4 das Förderband aus Fig. 1 in einer vereinfachten Ansicht von unten.

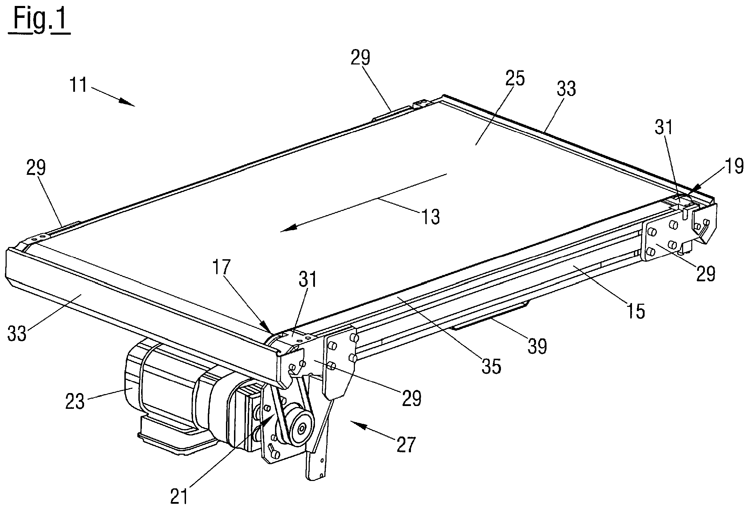

Das in Fig. 1 gezeigte Förderband ist Teil einer Förderbandwaage, beispielsweise eines Checkweighers oder eines Preisauszeichners, die auf eine Waageneinheit mit mindestens einer Wägezelle, insbesondere bis zu vier Wägezellen, der Förderbandwaage aufgesetzt ist. Bei dem gezeigten Förderband handelt es sich dann um ein Wägeband 11. Das Wägeband 11 ist üblicherweise zwischen ein Zuführband und ein Abführband geschaltet, die in einer besonderen Ausführungsform ebenfalls die erfindungsgemäßen Merkmale des Wägebands 11 aufweisen können. Durch das Wägeband 11, insbesondere in Verbindung mit dem Zuführband und dem Abführband, kann Stückgut bzw. Wägegut über die Waageneinheit transportiert werden, um das Gewicht des jeweiligen Stückguts zu bestimmen. Die Gewichtsbestimmung erfolgt in der Regel während des Weitertransports des jeweiligen Stückguts. Grundsätzlich kann zur Gewichtsbestimmung der Transportvorgang jedoch auch angehalten werden.

Das Wägeband 11, das das Stückgut in einer Transportrichtung 13 transportiert, umfasst einen Bandkörper 15, insbesondere aus Aluminium, der zwischen einer ersten Transportrolle 17, die als Antriebsrolle ausgebildet ist, und einer zweiten Transportrolle 19, die als Mitlaufrolle ausgebildet ist, angeordnet ist. Die erste Transportrolle 17 und die zweite Transportrolle 19 sind in Fig. 1 größtenteils durch weitere Bestandteile des Wägebands 11, auf die nachstehend noch näher eingegangen wird, verdeckt. Die beiden Transportrollen 17, 19 sind jeweils in zwei Halterungen 29 drehbar gelagert, die zu beiden Seiten des Bandkörpers 15 in der Transportrichtung 13 bzw. entgegen der Transportrichtung 13 von dem Bandkörper 15 abstehen. Die erste Transportrolle 17 wird über ein Riemengetriebe 21 von einem Elektromotor 23 angetrieben, der über eine Halteeinrichtung 27 an dem Bandkörper 15 fest angebracht ist.

Darüber hinaus umfasst das Wägeband 11 ein als Endlosgurt ausgebildetes Transportband 25, das im Betrieb des Wägebands 11 um den Bandkörper 15 und die beiden Transportrollen 17, 19 umläuft. Ferner umfasst das Wägeband 11 vier Abdeckbleche 31, die links und rechts der beiden Transportrollen 17, 19 angeordnet sind, wobei der Einfachheit halber lediglich die beiden in Fig. 1 vorderen Abdeckbleche 31 mit einem Bezugszeichen versehen sind. Darüber hinaus ist ein- und auslaufseitig jeweils eine an dem Bandkörper 15 angebrachte Schutzleiste 33 für das Transportband 25 vorgesehen, über die das Wägeband 11 und ein zumindest auslaufseitig entsprechend ausgebildetes Zuführband und ein zumindest einlaufseitig entsprechend ausgebildetes Abführband Stoß-auf-Stoß aneinandergereiht werden können.

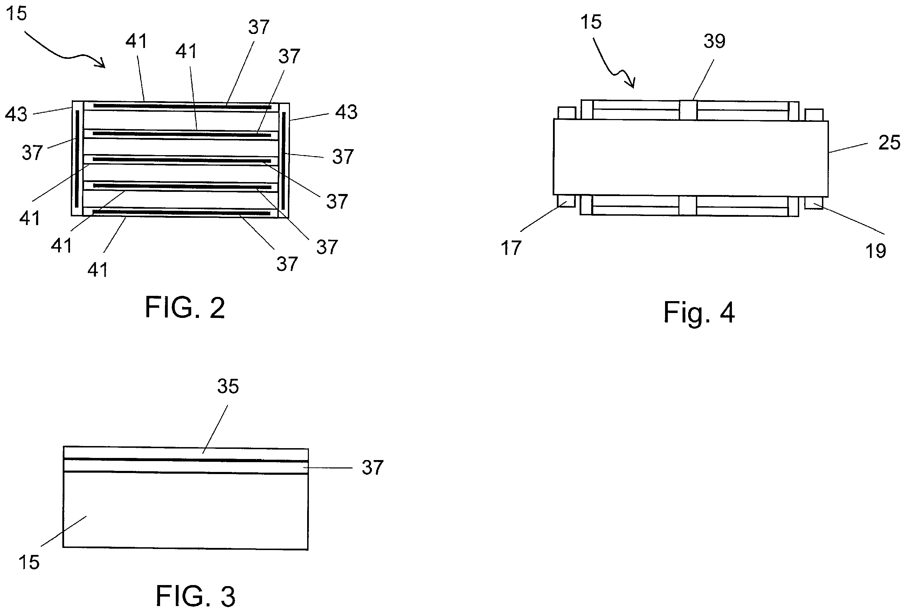

In Fig. 2 ist der Bandkörper 15 in einer Einzeldarstellung gezeigt. Wie sich aus der Fig. 2 ergibt, umfasst der Bandkörper 15 eine Profilanordnung, die aus mehreren Profilen 41, 43 zusammengesetzt ist. In dem gezeigten Beispiel umfasst die Profilanordnung vier sich in Transportrichtung 13 des Stückguts erstreckende Profile 41 und zwei sich quer zur Transportrichtung 13 des Stückguts erstreckende Profile 43. Bei den Profilen 41, 43 handelt es sich jeweils um Strangpressprofile, insbesondere aus Aluminium.

Um das Gewicht der über die Waageneinheit transportierten Stückgüter mit möglichst hoher Genauigkeit bestimmen zu können, ist es erforderlich, dass das Obertrum des Transportbands 25 auf einer möglichst ebenen Oberfläche aufliegt bzw. über eine möglichst ebene Oberfläche hinweggleiten kann. Um dies zu erreichen, weist das Wägeband 11 eine Deckplatte 35 auf (vgl. Fig. 1), insbesondere aus Metall, die zwischen der Oberseite des Bandkörpers 15 und dem Obertrum des Transportbands 25 angeordnet ist, so dass das Obertrum des Transportbands 25 auf der Deckplatte 35 aufliegt. Die Deckplatte 35 erstreckt sich dabei in Transportrichtung 13 über die gesamte Länge des Bandkörpers 15 und steht beidseitig unter dem Obertrum des Transportbands 25 hervor.

Die Deckplatte 35 ist mittels eines doppelseitigen elastischen Klebebands 37 auf die Oberseite des Bandkörpers 15 aufgeklebt (vgl. Fig. 2 und 3). Das Klebeband 37 umfasst mehrere Klebebandstreifen, die jeweils auf eines der Profile 41, 43 aufgeklebt sind. Jeder Klebebandstreifen 37 erstreckt sich über wenigstens 80% der Länge des jeweiligen Profils 41, 43. Insgesamt erstreckt sich das Klebeband 37 damit über eine Länge von wenigstens 80% der Gesamtlänge der Profile 41, 43 zusammen. Die Deckplatte 35 ist damit flächig auf den Bankkörper 15 aufgeklebt. Die Breite des Klebebands 37 bzw. der Klebebandstreifen ist dabei kleiner als die Breite oder gleich der Breite des jeweiligen Profils 41, 43.

Das doppelseitige Klebeband 37 besteht aus einem einheitlichen Material, beispielsweise aus einem geschlossenzelligen Acrylatklebstoff. Gegenüber einem Schaumstoff-Klebeband mit einem Schaumträger, auf dem lediglich auf der Oberseite und der Unterseite ein dünner Klebestofffilm vorhanden ist, können durch das Klebeband 37 aus einem einheitlichen Material höhere Scherkräfte aufgenommen werden, ohne dass das Klebeband 37 reißt oder sich ablöst.

Darüber hinaus ist an der Unterseite des Bandkörpers 15, zumindest im Wesentlichen mittig, eine Strebe 39 angebracht, die sich quer, insbesondere senkrecht zur Transportrichtung 13 über die Breite des Bandkörpers 15 erstreckt (vgl. insb. Fig. 4). Die Querstrebe 39 kann ebenfalls mittels eines doppelseitigen Klebebands, wie es vorstehend beschrieben ist, oder beispielsweise mittels Anschrauben an der Unterseite des Bandkörpers 15 befestigt werden. Durch die Querstrebe 39 kann ein ruhiger Lauf des Untertrums des Transportbands 25 unterstützt werden.

Durch das erfindungsgemäße Förderband mit der mittels des doppelseitigen Klebebands aufgeklebten Deckplatte kann auf einfache Weise eine ebene Unterlage für das Obertrum des Transportbands realisiert werden, wodurch bei einer Gewichtsbestimmung eine hohe Genauigkeit ermöglicht wird.

### Bezugszeichenliste

- 11: Wägeband
- 13: Transportrichtung
- 15: Bandkörper
- 17: Transportrolle
- 19: Transportrolle
- 21: Riemengetriebe
- 23: Elektromotor
- 25: Transportband
- 27: Halteeinrichtung
- 29: Halterung
- 31: Abdeckleiste
- 33: Schutzleiste
- 35: Deckplatte
- 37: Klebeband
- 39: Querstrebe
- 41: Profil
- 43: Profil

## Patentansprüche

1. Förderband zum Transport von Stückgut, insbesondere für eine Förderbandwaage, das einen Bandkörper (15) mit einer Oberseite, einer Unterseite und einer sich in Transportrichtung (13) des Stückguts erstreckenden Länge und ein im Betrieb des Förderbands (11) um den Bandkörper (15) umlaufendes Transportband (25) umfasst,
**dadurch gekennzeichnet, dass**
eine Deckplatte (35) vorgesehen ist, die mittels eines doppelseitigen Klebebands (37) auf die Oberseite des Bandkörpers (15) aufgeklebt ist und auf der das Obertrum des Transportbands (25) aufliegt, wobei das Klebeband (37) aus einem einheitlichen Material besteht, d.h. das Klebeband (37) besteht durch und durch aus Klebstoff.

2. Förderband nach Anspruch 1,
**dadurch gekennzeichnet, dass**
das Klebeband (37) aus einem geschlossenzelligen Acrylatklebstoff besteht.

3. Förderband nach zumindest einem der vorstehenden Ansprüche,
**dadurch gekennzeichnet, dass**
sich die Deckplatte (35) über die gesamte Länge des Bandkörpers (15) erstreckt.

4. Förderband nach zumindest einem der vorstehenden Ansprüche,
**dadurch gekennzeichnet, dass**
die Deckplatte (35) in Transportrichtung (13) des Förderbands (11) ein- oder beidseitig unter dem Obertrum des Transportbands (25) hervorsteht.

5. Förderband nach zumindest einem der vorstehenden Ansprüche,
**dadurch gekennzeichnet, dass**
die Deckplatte (35) aus einem Metall, insbesondere einer metallischen Legierung, insbesondere Stahl, gefertigt ist.

6. Förderband nach zumindest einem der vorstehenden Ansprüche,
**dadurch gekennzeichnet, dass**
der Bandkörper (15) aus einem Metall, insbesondere Aluminium, gefertigt ist.

7. Förderband nach zumindest einem der vorstehenden Ansprüche,
**dadurch gekennzeichnet, dass**
an der Unterseite des Bandkörpers (15) eine weitere Deckplatte oder eine Querstrebe (39) angebracht ist, insbesondere mittels Anschrauben oder Kleben.

8. Förderband nach zumindest einem der vorstehenden Ansprüche,
**dadurch gekennzeichnet, dass**
der Bandkörper (15) eine aus mehreren Profilen (41, 43) zusammengesetzte Profilanordnung umfasst, wobei das Klebeband (37) auf den Profilen (41, 43) angebracht ist.

9. Förderband nach zumindest einem der vorstehenden Ansprüche,
**dadurch gekennzeichnet, dass**
das Klebeband (37) mehrere Klebebandstreifen umfasst, und die Gesamtlänge der Klebebandstreifen zusammen wenigstens 140% der Länge des Bandkörpers (15) beträgt und /oder sich das Klebeband (37) über eine Länge von wenigstens 40% der Gesamtlänge der Profile (41, 43) zusammen erstreckt.

10. Förderbandwaage mit einer Waageneinheit mit zumindest einer Wägezelle und einem auf die Waageneinheit aufgesetzten Förderband (11) gemäß einem der vorstehenden Ansprüche.

11. Verfahren zur Herstellung eines Förderbands (11) zum Transport von Stückgut, insbesondere für eine Förderbandwaage, das einen Bandkörper (15) mit einer Oberseite, einer Unterseite und einer sich in Transportrichtung (13) des Stückguts erstreckenden Länge und ein im Betrieb des Förderbands (11) um den Bandkörper (15) umlaufendes Transportband (25) umfasst, bei dem mittels eines doppelseitigen Klebebands (37) eine Deckplatte (35), auf der das Obertrum des Transportbands (25) aufliegt, auf die Oberseite des Bandkörpers (15) aufgeklebt wird, wobei das Klebeband (37) aus einem einheitlichen Material besteht, d.h. das Klebeband (37) besteht durch und durch aus Klebstoff.

## Claims

1. A conveyor belt for transporting piece goods, in particular for a conveyor belt scale, which comprises a belt body (15) having an upper side, a lower side and a length extending in the transport direction (13) of the piece goods; and a transport belt (25) running around the belt body (15) in the operation of the conveyor belt (11),
**characterized in that**
a cover plate (35) is provided which is adhesively bonded to the upper side of the belt body (15) by means of a double-sided adhesive tape (37) and on which the upper run of the transport belt (25) lies, with the adhesive tape (37) consisting of a uniform material, i.e. the adhesive tape (37) completely consists of adhesive.

2. A conveyor belt in accordance with claim 1,
**characterized in that**
the adhesive tape (37) consists of a closed-cell acrylate adhesive.

3. A conveyor belt in accordance with at least one of the preceding claims,
**characterized in that**
the cover plate (35) extends over the total length of the belt body (15).

4. A conveyor belt in accordance with at least one of the preceding claims,
**characterized in that**
the cover plate (35) projects in the transport direction (13) of the conveyor belt (11) at one side or both sides below the upper run of the transport belt (25).

5. A conveyor belt in accordance with at least one of the preceding claims,
**characterized in that**
the cover plate (35) is produced from a metal, in particular a metal alloy, in particular steel.

6. A conveyor belt in accordance with at least one of the preceding claims,
**characterized in that**
the belt body (15) is produced from a metal, in particular aluminum.

7. A conveyor belt in accordance with at least one of the preceding claims,
**characterized in that**
a further cover plate or a transverse strut (39) is attached to the lower side of the belt body (15), in particular by means of screwing on or gluing.

8. A conveyor belt in accordance with at least one of the preceding claims,
**characterized in that**
the belt body (15) comprises a section arrangement assembled from a plurality of sections (41, 43), with the adhesive tape (37) being applied to the sections (41, 43).

9. A conveyor belt in accordance with at least one of the preceding claims,
**characterized in that**
the adhesive tape (37) comprises a plurality of adhesive tape strips and the total length of the adhesive tape strips together amounts to at least 140% of the length of the belt body (15) and/or the adhesive tape (37) extends over a length of at least 40% of the total length of the sections (41, 43) together.

10. A conveyor belt scale comprising a scale unit having at least one load cell;
and a conveyor belt (11) in accordance with any one of the preceding claims which is placed onto the scale unit.

11. A method of producing a conveyor belt (11) for transporting piece goods, in particular for a conveyor belt scale, which comprises a belt body (15) having an upper side, a lower side and a length extending in the transport direction (13) of the piece goods; and a transport belt (25) running around the belt body (15) in the operation of the conveyor belt (11), in which a cover plate (35), on which the upper run of the transport belt (25) lies, is adhesively bonded to the upper side of the belt body (15) by means of a double-sided adhesive tape (37), wherein the adhesive tape (37) consists of a uniform material, i.e. the adhesive tape (37) completely consists of adhesive.

## Revendications

1. Bande transporteuse pour le transport de marchandises de détail, en particulier destinée à une balance à bande transporteuse, qui comprend un corps de bande (15) ayant une face supérieure, une face inférieure et une longueur s'étendant dans la direction de transport (13) des marchandises de détail, et une bande de convoyage (25) tournant autour du corps de bande (15) pendant le fonctionnement de la bande transporteuse (11),
**caractérisée en ce que**
il est prévu une plaque de recouvrement (35) qui est collée sur la face supérieure du corps de bande (15) au moyen d'un ruban adhésif double face (37) et sur laquelle repose le brin supérieur de la bande de convoyage (25), le ruban adhésif (37) étant constitué d'un matériau uniforme, c'est-à-dire le ruban adhésif (37) étant constitué exclusivement d'adhésif.

2. Bande transporteuse selon la revendication 1,
**caractérisée en ce que**
le ruban adhésif (37) est constitué d'un adhésif acrylique à cellules fermées.

3. Bande transporteuse selon l'une au moins des revendications précédentes,
**caractérisée en ce que**
la plaque de recouvrement (35) s'étend sur toute la longueur du corps de bande (15).

4. Bande transporteuse selon l'une au moins des revendications précédentes,
**caractérisée en ce que**
la plaque de recouvrement (35) fait saillie sur un côté ou sur les deux côtés au-dessous du brin supérieur de la bande de convoyage (25) dans la direction de transport (13) de la bande transporteuse (11).

5. Bande transporteuse selon l'une au moins des revendications précédentes,
**caractérisée en ce que**
la plaque de recouvrement (35) est fabriquée en un métal, en particulier en un alliage métallique, en particulier en acier.

6. Bande transporteuse selon l'une au moins des revendications précédentes,
**caractérisée en ce que**
le corps de bande (15) est fabriqué en un métal, en particulier en aluminium.

7. Bande transporteuse selon l'une au moins des revendications précédentes,
**caractérisée en ce que**
une autre plaque de recouvrement ou une entretoise transversale (39) est montée sur la face inférieure du corps de bande (15), en particulier par vissage ou par collage.

8. Bande transporteuse selon l'une au moins des revendications précédentes,
**caractérisée en ce que**
le corps de bande (15) comprend un ensemble de profilés composé de plusieurs profilés (41, 43), le ruban adhésif (37) étant appliqué aux profilés (41, 43).

9. Bande transporteuse selon l'une au moins des revendications précédentes,
**caractérisée en ce que**
le ruban adhésif (37) comprend plusieurs bandes de ruban adhésif, et la longueur totale des bandes de ruban adhésif prises ensemble est d'au moins 140 % de la longueur du corps de bande (15), et/ou le ruban adhésif (37) s'étend sur une longueur d'au moins 40 % de la longueur totale des profilés (41, 43) pris ensemble.

10. Balance à bande transporteuse comprenant une unité de pesage ayant au moins une cellule de pesage et une bande transporteuse (11), placée sur l'unité de pesage, selon l'une des revendications précédentes.

11. Procédé de fabrication d'une bande transporteuse (11) pour le transport de marchandises de détail, en particulier destinée à une balance à bande transporteuse, qui comprend un corps de bande (15) ayant une face supérieure, une face inférieure et une longueur s'étendant dans la direction de transport (13) des marchandises de détail, et une bande de convoyage (25) tournant autour du corps de bande (15) pendant le fonctionnement de la bande transporteuse (11), dans lequel une plaque de recouvrement (35) sur laquelle repose le brin supérieur de la bande de convoyage (25) est collée sur la face supérieure du corps de bande (15) au moyen d'un ruban adhésif double face (37),
le ruban adhésif (37) étant constitué d'un matériau uniforme, c'est-à-dire le ruban adhésif (37) étant constitué exclusivement d'adhésif.
